# EUROPEAN PATENT SPECIFICATION

(11) **EP 3 058 464 B1**
(45) Date of publication and mention of the grant of the patent: **15.11.2017**
(21) Application number: 14711258.5
(22) Date of filing: 20.03.2014
(51) Int. Cl.: G06F 9/54, H04L 29/08

(54) **METHOD AND CONTROLLER FOR CHAINING APPLICATIONS IN A SOFTWARE DEFINED NETWORK**
VERFAHREN UND KONTROLLER ZUR VERKETTUNG VON ANWENDUNGEN IN EINEM PER SOFTWARE DEFINIERTEN NETZWERK
MÉTHODE ET CONTROLLEUR POUR ENCHAÌNER DES LOGICIELS DANS UN RÉSEAU DÉFINI LOGIQUEMENT

(30) Priority: 06.12.2013 WO PCT/EP2013/075800
(43) Date of publication of application: 24.08.2016
(73) Proprietor: Huawei Technologies Co., Ltd., Longgang District Shenzhen, Guangdong 518129 (CN)
(72) Inventor: PORAT, Hayim, 80992 Munich (DE)
(74) Representative: Kreuz, Georg Maria
(86) International application number: PCT/EP2014/055571
(87) International publication number: WO 2015/082084

(56) References cited:
- US-A1- 2011 238 942
- US-A1- 2012 239 727
- YING ZHANG ET AL: "StEERING: A software-defined networking for inline service chaining", 2013 21ST IEEE INTERNATIONAL CONFERENCE ON NETWORK PROTOCOLS (ICNP), IEEE, 7 October 2013 (2013-10-07), pages 1-10, XP032563772, DOI: 10.1109/ICNP.2013.6733615
- DAS TAMAL ET AL: "An agent-based modeling approach of network migration to new technologies", 2013 IEEE INTERNATIONAL CONFERENCE ON COMMUNICATIONS (ICC), IEEE, 9 June 2013 (2013-06-09), pages 2583-2588, XP032522438, ISSN: 1550-3607, DOI: 10.1109/ICC.2013.6654924 [retrieved on 2013-11-04]
- RISSO FULVIO ET AL: "Some Controversial Opinions on Software-Defined Data Plane Services", 2013 IEEE SDN FOR FUTURE NETWORKS AND SERVICES (SDN4FNS), IEEE, 11 November 2013 (2013-11-11), pages 1-7, XP032540965, DOI: 10.1109/SDN4FNS.2013.6702558
- ZHU JIAFENG ET AL: "Software Service Defined Network: Centralized Network Information Service", 2013 IEEE SDN FOR FUTURE NETWORKS AND SERVICES (SDN4FNS), IEEE, 11 November 2013 (2013-11-11), pages 1-7, XP032540962, DOI: 10.1109/SDN4FNS.2013.6702556
- JOHN WOLFGANG ET AL: "Research Directions in Network Service Chaining", 2013 IEEE SDN FOR FUTURE NETWORKS AND SERVICES (SDN4FNS), IEEE, 11 November 2013 (2013-11-11), pages 1-7, XP032540960, DOI: 10.1109/SDN4FNS.2013.6702549

## Description

### TECHNICAL FIELD

The present invention relates to a method for chaining applications in a software defined network (SDN), and further relates to a corresponding SDN controller and a system. In particular, the present invention provides service awareness, a service chaining infrastructure, and a service information sharing infrastructure to a SDN controller.

### BACKGROUND

In modern service-oriented networks, and in particular in cloud and SDN environments, there is a need to provide complex service offerings, which are composed of chained service elements, e.g. chained SDN applications. SDN applications may be applications such as firewalls (FW), wide area network (WAN) optimization controllers (WOC), deep packet inspection (DPI), network address translation (NAT), application delivery controllers (ADC) or the like. For example, network traffic can first go through a stateful firewall, in order to ensure security, and can then go through an ADC, in order to distribute the load across multiple servers. In the physical networking world such a service chain is typically configured manually.

In the SDN approach such a service chain is configured and administered all in software, which can adapt as the services, for instance the SDN applications. The state of the art provides to this end so-called naive chaining of virtual applications in cloud virtualizations and SDN applications in a SDN. Naive chaining means that a plurality of applications is chained together without, for example, the SDN controller being aware of the SDN applications and/or the type of SDN applications it chains. Naive chaining is today pursued by many companies, although it has several disadvantages and problems.

For example, the order of the plurality of applications chained in the naive service chain may have implications on the overall behavior of the service chain. In other words, the order, by which different applications are chained together in the service chain, may severely influence the outcome of the service chain. Moreover, different applications in a naive service chain may interfere with each other, and thereby reduce the performance or even prohibit certain processes. For example, encryption (crypto) prohibits DPI. Or NAT before a firewall prevents a stateful inspection. Another problem of naive service chaining is that many applications duplicate and repeat specific core functions. For example, DPI is repeated by many applications. Due to the repetition, precious computation resources are wasted. Document "StEERING: A software-defined networking for inline service chaining", presented during the 21st IEEE International Conference on Network Protocols (ICNP) in October 2013, describes a scalable framework for dynamically steering traffic through a set of middleboxes (also called inline services). Together with an algorithm that selects the best locations to place services (thus optimizing performance) the system allows users to select available network services in a flexible way.

### SUMMARY

In view of the above disadvantages and problems, the present invention aims to improve the state of the art. In particular, the object of the present invention is to introduce service awareness and a service chaining infrastructure in the SDN controller. In other words, the object of the present invention is that the SDN controller is aware of the applications and application types it chains. Thereby, the present invention has specifically the aim that different applications in a service chain do not interfere with each other. The present invention also intends to reduce the necessary computation resources, specifically by employing synergistic effects of different applications in a service chain. The present invention also desires to make it easier for third party application developers to create new and unique applications without the need to consider interactions with other existing applications. In general, the present invention has the overall goal to provide an efficient and optimized application chaining (service chaining), while utilizing the ability of SDN to run network services as applications over an SDN controller.

The above-mentioned object of the present invention is achieved by the solution provided in the enclosed independent claims. Advantageous implementations of the present invention are further defined in the respective dependent claims. In particular, according to the claimed method and claimed SDN controller, an awareness of the applications in a service chain is provided to the SDN controller, and the service chaining can as a consequence be made more efficient.

A first aspect of the present invention provides a method for chaining applications in a software defined network (SDN), the method comprising creating a service data table in an SDN controller, wherein in the service data table a plurality of applications is associated with a plurality of application types, creating at least one service chain defining an order of application types in an SDN controller, and registering at least one application to the at least one service chain based on the application type associated with the at least application in the service data table.

A service chain is a routing context that defines a scheme for routing a flow comprising at least one data packet between applications in a predefined order. The routing scheme will cause the at least one data packet to go to and from the applications linked by the service chain. The routing scheme is stored in a database of the SDN controller. If more than one service chain is created in the SDN controller, these service chains are called different service chain instances, are all stored in the database, and may be managed in the SDN controller. Each service chain instance may be an instantiation of a routing scheme with a different set of applications and/or a different predefined routing order. That means, for each service chain instance, the database may include information about the applications and/or application types which are to be chained, and the order in which the applications and/or application types are to be chained.

Any service chain instance is a set of forwarding instructions, which are programmed by the SDN controller to the relevant forwarding entities. For example, if a plurality of applications is running on the SDN controller, a service chain instance may be the way the inter process communication (IPC) is configured to deliver the packets between the plurality of applications. Applications in a service chain are themselves only aware of their location in the routing scheme, but are not necessarily aware of the actual routing of the at least one data packet and/or of the actual locations of other applications in the service chain.

In general, the above-described method of the present invention implements service awareness into the SDN controller. That means that by performing the method of the present invention, the SDN controller becomes aware of the applications it chains. The method of the present invention enables a more efficient and optimized service chaining, i.e. chaining of applications, while the ability of an SDN to run network services as applications over the SDN controller is fully utilized.

In particular, when a flow comprising at least one data packet is routed by the SDN controller through the one or more applications contained in a service chain, the routing is carried out according to the order of applications as stored in the SDN controller in respect to said service chain (or service chain instance). The order of the applications, i.e. in particular the order of application types, ensures that applications of different types do not interfere with each other. Furthermore, the order of the applications according to the service chain also ensures that applications of different types can synergize with each other. For example, an application of the DPI type can be provided at the beginning of the service chain, so that the succeeding applications in the service chain may use the information obtained by the DPI application. The same could be done for an application of the crypto type. As a consequence, individual applications can be programmed more lean and simple, since they can leverage the synergy of having, for example, DPI or crypto done at a separate place in the service chain. This makes it easier for application developers to develop new applications or new services for the SDN environment.

In the method of the present invention, the at least one service chain is the essential mechanism for coordinating between the various types of applications. By associating each service application with a predefined application type, and by using the service data table for storing said association of applications and application types, an easy integration of an application of one type with other applications of other types is enabled. In particular, unwanted interferences between different application types are eliminated. Thereby, for instance, a mix and match of best of breed SDN applications from different vendors is enabled. Moreover, the developers of new applications are freed from integration considerations with other applications, since in the method of the present invention all integration is done by the SDN controller.

The at least one service chain preferably supports both a sequential operation of the service chain (i.e. one application after the other operates on a flow), or a concurrent operation of the service chain (i.e. multiple applications operate on a flow in parallel).

In a first implementation form of the method according to the first aspect, the method further comprises exposing the at least one service chain and the service data table to applications through at least one application programming interface, API.

The at least one API enables the at least one application to register to the at least one service chain in a simple manner and according to its application type. The API provides a standardized interface for developers of new applications. The at least one application is furthermore enabled to access the internal data flow and the service data table via the at least one API. For example, applications may be enabled to selectively access specific entries of fields within the service data table through an API.

By using common APIs and data structures at the SDN controller, third party application developers may create their own unique applications without needing to consider interactions with other applications. Through the at least one API, different applications can also be aware of each other, can thus avoid interferences between each other, and can even use synergies.

In a second implementation form of the method according to the first aspect as such or according to the first implementation form of the first aspect, the method comprises creating in the at least one service chain a plurality of service insertion points for applications, wherein each service insertion point accepts (only) applications of one or several application types associated to the service insertion point.

Service insertion points are locations (points) in the routing scheme of the at least one service chain, where specific types of applications (as defined by the service data table) may register and reside, i.e. where specific types of applications may be inserted. For different service chain instances, applications may adhere to different points of the routing scheme. Each service insertion point has a unique role in the at least one service chain, and preferably (only) accepts a specific type or a limited number of specific types of applications. In other words, each service insertion point is selective to at least one application type. More than one application of the same type can be registered per service insertion point. However, per flow only one application of a specific type may also be used. Furthermore different service insertion points may accept different types of applications.

Since each application is associated in the service data table with a predefined application type, the SDN controller, by accessing the service data table, is able to associate each application to the relevant service insertion point. By coordinating application types between the SDN controller and applications (and application developers) the correct assignment of an application to the right service insertion point is ensured. As a consequence, by creating the service chain with the service insertion points, the method of the present invention provides an optimized application order, and particularly an order that is consistent for all flows that are routed through the service chain. The order of the service insertion points helps optimizing the overall service delivery and the performance of the service chaining.

In a third implementation form of the method according to the second implementation form of the first aspect, each service insertion point is exposed to applications through at least one API.

Thereby, the at least one application is enabled to register to a specific service insertion point according to its application type. Applications of different type can register to different service insertion points. However, a service insertion point may also support various application types.

In a fourth implementation form of the method according to the first aspect as such or according to any of the previous implementation forms of the first aspect, the registering step comprises determining, by the SDN controller, the application type of the at least one application according to the service data table, and associating, by the SDN controller, the at least one application with at least one service insertion point according to the determined application type.

The SDN controller can thereby manage and optimize the order of the applications in the service chain. The SDN controller is aware of the different application types, and can order the applications according to their types so as to avoid interferences, and preferably even use synergies, between applications. Thus, an efficient an optimized service chaining is enabled by the method of the present invention.

In a fifth implementation form of the method according to the fourth implementation form of the first aspect, the registering step comprises creating, by the SDN controller, a new application type in the service data table, if the at least one application is determined not to be associated with an application type in the service data table, and associating, by the SDN controller, the at least one application with at least one service insertion point according to the created application type.

As a consequence, application developers do not need to worry about integrating a newly developed application into a service chain, and do not need to take into account interactions of their application with other applications. In the method of the present invention the SDN controller takes care of integrating the application into the at least one service chain.

In a sixth implementation form of the method according to any of the second to fifth implementation forms of the first aspect, data traffic between the service insertion points is transmitted by a service chain dispatcher.

In a seventh implementation form of the method according to the first aspect as such or according to any of the previous implementation forms of the first aspect, the method further comprises routing, by the SDN controller, at least one flow comprising at least one data packet according to the at least one service chain of applications.

Not all applications in the at least one service chain need to be used per flow. Thus, the service chain is flexible and adaptable per flow. It is also possible to steer only a part of a flow, which is needed by a specific application, to said application.

In an eighth implementation form of the method according to the seventh implementation form of the first aspect, the method further comprises extracting, by the at least one application, metadata from the flow, and storing the extracted metadata as information about the flow in a flow table.

In the flow table centralized flow information and metadata information may be maintained for different applications to share amongst each other. In other words, the flow table enables a sharing of information with regards to the flows between different applications, and particularly applications of different types. Applications may access the flow, in order to obtain the flow information. As will be described in more detail below, the flow table can be created in the SDN controller itself, can be created in an external chaining module accessible by the SDN controller, or can be distributed between the at least one application.

For example, an application of the DPI type may extract information about "micro-flows" from a main flow, which is routed through the service chain. The application may then populate the service data table with the extracted micro-flow information. Other applications may access the service data table, and may use said micro-flow information. Thus, applications are enabled to synergistically exchange information.

Additionally, information about flow changes may be stored by an application within the service data table for further use by other applications. For example, an application of the NAT, type may change the source IP of a flow, and may register this change in a dedicated entry or field in the service data table. Applications succeeding the NAT application in the service chain may learn of and use the changed source IP.

In a ninth implementation form of the method according to the eighth implementation form of the first aspect, the metadata extracted from the flow comprises an application type, a specific application ID, a user ID and/or a flow content ID.

In a tenth implementation form of the method according to the eighth or ninth implementation form of the first aspect, the metadata extracted from the flow comprises frame information about each frame of the flow.

In an eleventh implementation form of the method according to the tenth implementation form of the first aspect, the frame information comprises a frame marked for dropping, a changed header and/or previous header information.

In a twelfth implementation form of the method according to the eighth to eleventh implementation form of the first aspect, a plurality of applications share the metadata stored in the flow table.

In a thirteenth implementation form of the method according to the eighth to twelfth implementation forms of the first aspect, the flow table is created in the SDN controller.

In other words, the flow table is internal to the SDN controller. Due to the internal flow table, both the service chaining infrastructure and a service information sharing infrastructure are located in the SDN controller. Thus, the chained applications are provided by the SDN controller with the possibility to share information amongst each other, for instance, information about network data traffic, i.e. about a flow through the service chain. Therefore, the SDN controller is able to achieve alone several advantages of the present invention. Furthermore, the least amounts of devices are necessary in this implementation, and the fastest service chaining may be achieved.

In a fourteenth implementation form of the method according to the thirteenth implementation form of the first aspect, the at least one flow is routed through the SDN controller according to the at least one service chain of applications.

In a fifteenth implementation form of the method according to any of the eighth to twelfth implementation forms of the first aspect, the flow table is created in a chaining module connected to the SDN controller.

In other words, the flow table is provided external to the SDN controller. The chaining module is preferably exposed to the SDN controller and the applications through at least one API.

In a sixteenth implementation form of the method according to the fifteenth implementation form of the first aspect, the method further comprises creating, by the SDN controller, network paths between the at least one application and the chaining module according to the order of application types defined by the service chain.

In a seventeenth implementation form of the method according to the sixteenth implementation form of the first aspect, the at least one flow is routed through the chaining module and the network paths created by the SDN controller according to the at least one service chain of applications.

Due to the external flow table in the chaining module, the service information sharing infrastructure is located outside of the SDN controller. Thereby, the load on the SDN controller can be reduced.

In an eighteenth implementation form of the method according to any of the eighth to twelfth implementation forms of the first aspect, the flow table is distributed over the at least one application and a further application registered to the service chain.

In other words, the flow table is external to the SDN controller. The SDN controller may access the flow table via the (chain) APIs of the SDN controller and at least one application, respectively.

In a nineteenth implementation form of the method according to the eighteenth implementation form of the first aspect, the at least one flow comprising at least one data packet is routed through the at least one application and the further application according to the at least one service chain of applications by using a message passing mechanism.

Due to the external flow table in the applications, the service information sharing infrastructure is located outside of the SDN controller. Thereby, load is taken from the SDN controller, and may be distributed among the applications. The message passing mechanism may be provided in the SDN controller or an external module. The shortest routing paths may be achieved. Again any service chain instance is a set of forwarding instructions programmed by the SDN controller to the relevant forwarding entities. In this implementation form, in which the applications are running external to the SDN controller and a distributed flow table is used, a service chain instance may be realized by forwarding entries configured on (virtual) switches, of the hosts on which the applications are installed.

In a twentieth implementation form of the method according to any of the eighth to nineteenth implementation forms of the first aspect, the method further comprises querying, by the at least one application, the flow table, in order to obtain the stored information about the flow.

By querying the flow table, each application can obtain the stored flow and/or frame information. Thereby, synergies between applications can be used, and as a consequence the total processing load and the processing load per application is reduced.

In a twenty-first implementation form of the method according to the first aspect as such or according to any of the previous implementation forms of the first aspect, the service chain creating step comprises, creating, by the SDN controller, a plurality of service chains, and customizing, by the SDN controller, each service chain for a different customer.

The plurality of service chains are different service chain instances, wherein each service chain instance may be used for a different customer. Thus, the method of the present invention provides service chaining with increased flexibility.

In a twenty-second implementation form of the method according to any of the eighth to twenty-first implementation forms of the first aspect, the method further comprises associating, by the SDN controller, a plurality of flows to the at least one service chain using user defined filtering.

By employing user defined filtering, the at least one service chain created by the SDN controller can be customized easily and quickly. In particular, a single service chain may be dynamically customized for different users (customers), thus providing increased flexibility.

A second aspect of the present invention provides a software defined network, SDN, controller, for chaining applications in a SDN, wherein a service data table is installed in the SDN controller, wherein in the service data table a plurality of applications are associated with a plurality of application types, at least one service chain defining an order of application types is implemented on the SDN controller, and the SDN controller is configured to register at least one application to the service chain based on the application type associated with the application in the service data table.

The SDN controller of the second aspect can be further configured to carry out steps and actions according to the various implementations of the method of the first aspect described above.

In a first implementation form of the software defined network controller according to the second aspect, the SDN controller is configured to create in the at least one service chain a plurality of service insertion points for applications, wherein each service insertion point accepts only applications of one or several application types associated to the service insertion point.

In a second implementation form of the software defined network controller according to the second aspect as such or the first implementation form of the second aspect, the SDN controller is configured to determine the application type of the at least one application according to the service data table and the SDN controller is configured to associate the at least one application with at least one service insertion point according to the determined application type.

In a third implementation form of the software defined network controller according to the second implementation form of the second aspect, the SDN controller is configured to create a new application type in the service data table, if the at least one application is determined not to be associated with an application type in the service data table and the SDN controller is configured to associated the at least one application with at least one service insertion point according to the created application type.

In a fourth implementation form of the software defined network controller according to the second aspect as such or any one of the previous implementation forms of the second aspect, the SDN controller is configured to route at least one flow comprising at least one data packet according to the at least one service chain of applications, and a flow table is installed in the SDN controller, wherein in the flow table metadata extracted by the applications from the flow is stored as information about the flow.

A third aspect of the present invention provides a system comprising an SDN controller according to the second aspect as such or any of the first to third implementation forms of the second aspect and at least one application, wherein the SDN controller is configured to route at least one flow comprising at least one data packet according to the at least one service chain of applications, and the at least one application is configured to extract metadata from the flow, and to store the extracted metadata in a flow table as information about the flow.

According to a first implementation form of the system according to the third aspect as such, the flow table is created in the SDN controller, or the flow table is distributed over the at least one application and a further application registered to the service chain, or the system further comprises a chaining module connected to the SDN controller and the flow table is created in the chaining module.

Thereby, with the system of the third aspect, the respective advantages mentioned above for the method of the first aspect may be obtained.

A fourth aspect of the present invention provides a computer program having a program code for performing the method according to any of the implementation forms of the first aspect or the first aspect as such, when the computer program runs on a computer.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above aspects and implementation forms of the present invention will be explained in the following description of specific embodiments in relation to the enclosed drawings, in which
Fig. 1 shows a SDN controller, a flow table, and multiple SDN applications, which are registered according to an embodiment of the present invention to a service chain in the SDN controller.
Fig. 2 shows a service chain as implemented in the SDN controller according to an embodiment of the present invention.
Fig. 3 shows an SDN application according to an embodiment of the present invention.
Fig. 4 shows schematically a flow, which it is routed through a SDN controller according to an embodiment of the present invention.
Fig. 5 shows schematically a flow, which it is routed through a chaining module according to an embodiment of the present invention.
Fig. 6 shows schematically a flow, which it is routed through applications according to an embodiment of the present invention.
Fig. 7 shows three differently customized service chains according to an embodiment of the present invention.
Fig. 8 shows a flow diagram illustrating the service chaining according to an embodiment of the present invention, and
Fig. 9 shows a flow diagram illustrating a routing of a flow through the service chain according to an embodiment of the present invention.
Fig. 10 shows flow diagrams illustrating how the service chain is maintained with the flow table being created in the SDN controller, a chaining module or being distributed over SDN applications, respectively.

### DETAILED DESCRIPTION OF EMBODIMENTS

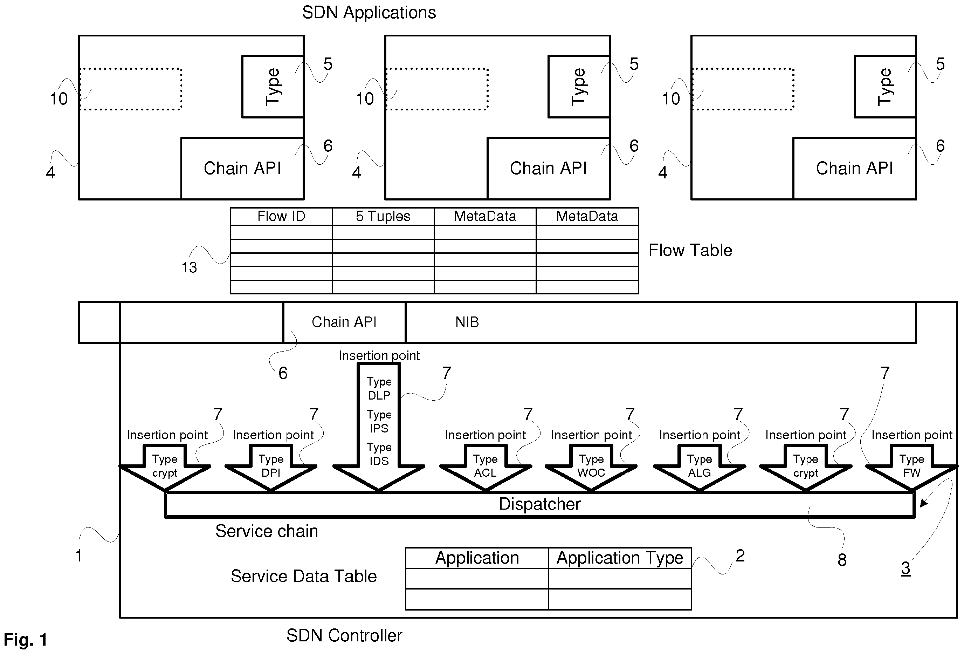

Fig. 1 shows a SDN environment including an SDN controller 1 according to an embodiment of the present invention, a flow table 13, and a plurality of SDN applications 4. The SDN controller 1 is configured to be aware of the services provided in the SDN network, i.e. to be aware of the plurality of SDN applications 4. Each SDN application 4 may be identified by a specific application type 5.

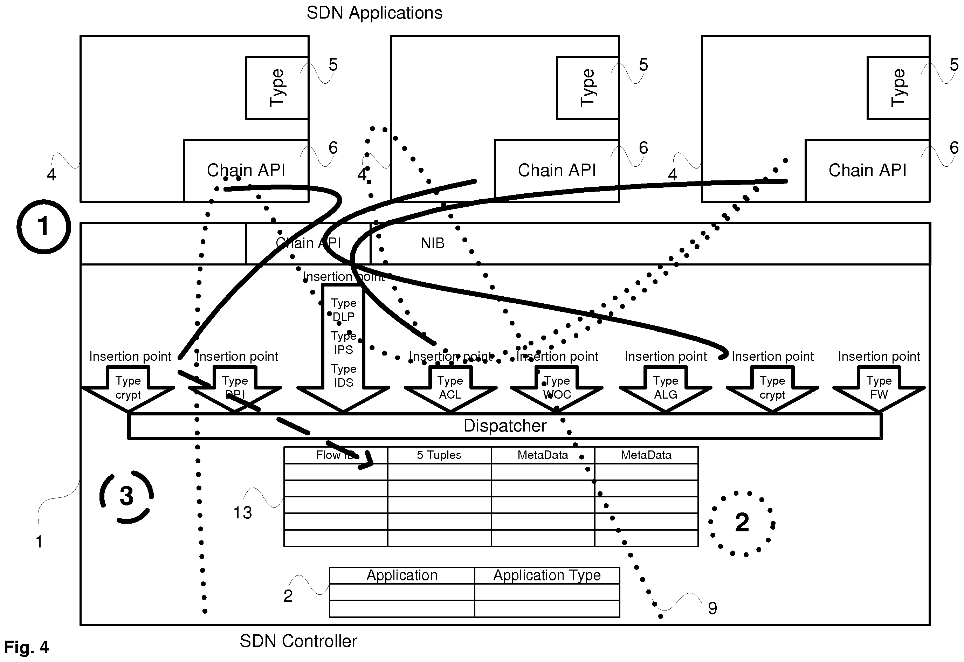

According to embodiments of the present invention, at least one service chain 3 is created and implemented in the SDN controller 1. The service chain 3 defines an order of SDN applications 4 in dependence of their application types 5. The SDN controller 1 can route network traffic, i.e. at least on flow 9 (as shown in Fig. 4) containing at least one data packet through the service chain 3, i.e. according to the order of the SDN applications 4 in the service chain 3. The SDN applications 4 of the service chain 3 then operate on the flow 9 according to their order. Thereby, the SDN applications 4 can operate on the flow one after the other and/or in parallel. The service chain 3 is a routing scheme. The information about the routing scheme is stored in a database or in a memory of the SDN controller 1. Different service chain 3 instances may be created and stored in the database or memory. For each service chain 3 (or service chain instance) a set of forwarding instructions is programmed by the SDN controller 1 to the relevant forwarding instances. For example, in case SDN applications 4 are run on the SDN controller 1, a service chain 3 may be realized by configuring the IPC to deliver data packets or frames of a flow from one application to the other. In case SDN applications 4 are run external to the SDN controller, a service chain 3 may be realized by configuring (virtual) switches, of the hosts on which the application are installed, to deliver data packets or frames of a flow from one application to the other.

Further, according to embodiments of the present invention a service data table 2 is created in the SDN controller 1, and is made accessible to the SDN applications 4.

The service data table 2 includes at least an association of each of the plurality of SDN applications 4 with predefined application types 5. In Fig. 1 three different SDN applications 4, i.e. SDN applications 4 of three different application types 5, are registered to one service chain 3 in the SDN controller 1. Each SDN application 4 is registered to the service chain 3 in the SDN controller 1 by at least one application programming interface, API, 6. The at least one API 6 exposes the service chain 3 to the SDN applications 4. The service data table 2 may also be accessed by the SDN applications 4 via at least one API 6. The order of the SDN applications 4 chained in the service chain 3 is based on their application types 5, which are stored in the service data table 2.

The service data table 2 is an important aspect of embodiments of the present invention. As mentioned above, in the service data table 2 at least a plurality of SDN applications 4 is associated with a plurality of application types 5. That means that each service (e.g. application) that is run on the SDN controller 1 is associated with one of a plurality of predetermined application types 5, and therefore - through its connection to the service data table - the SDN controller 1 is always aware of each application type 5 that is run on it. In this way, the SDN controller 1 is also able to run different applications 4 in a specific optimized order, particularly optimized according to the application type 5. The SDN controller 1 creates the at least one service chain 3 by taking into account the application types 5. When establishing the order, the SDN controller 1 takes into account possible interferences of different applications 4 and application types 5 or seeks to exploit synergistic effects between different applications 4 and application types 5 through the order.

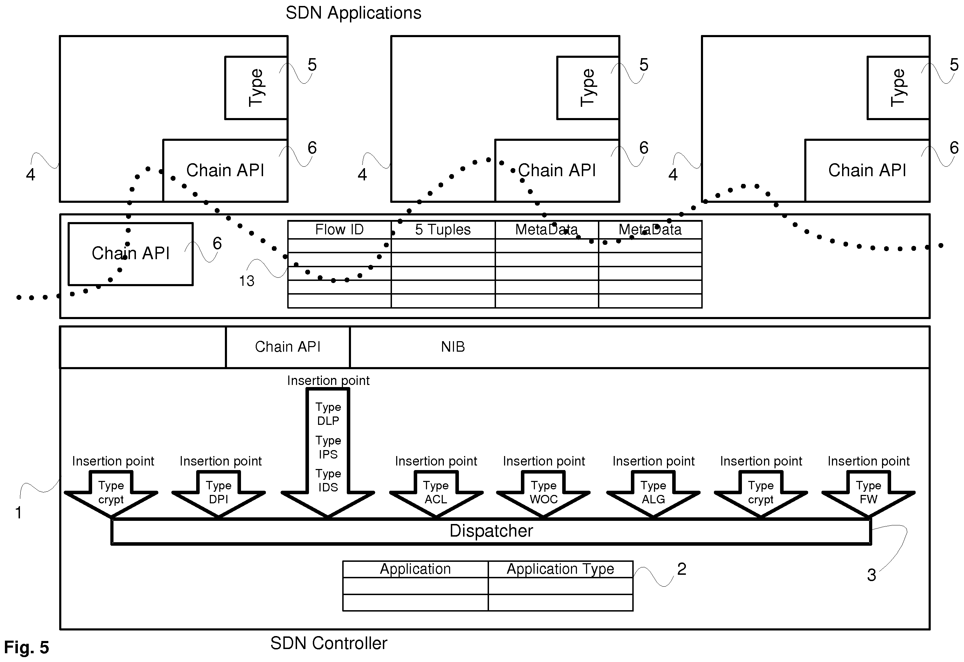

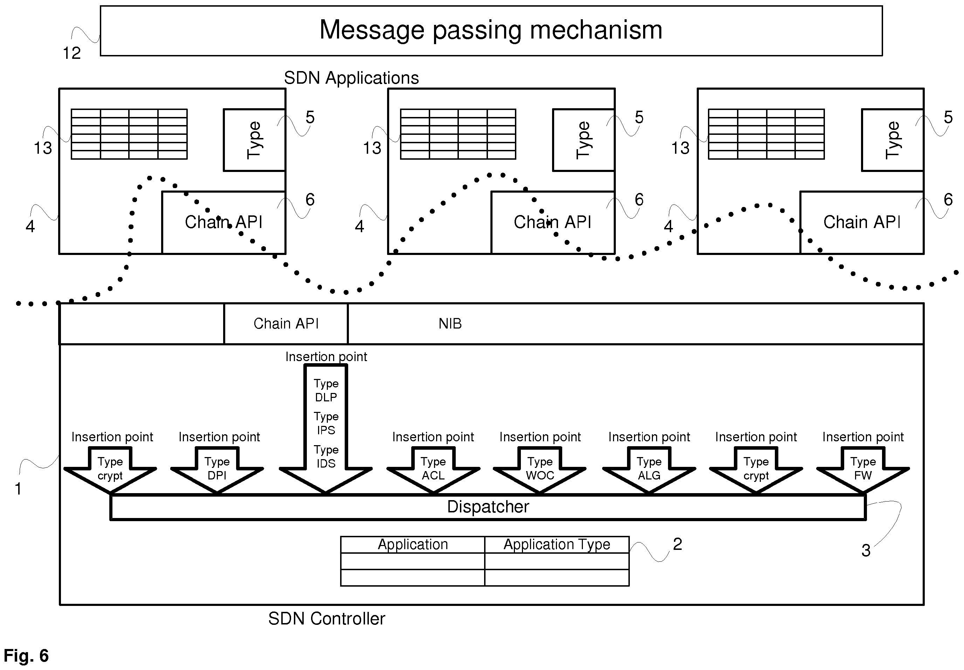

Further, according to embodiments of the present invention a flow table 13 is provided, and is made accessible to the SDN applications 4 and the SDN controller 1. The flow table 13 may be created in the SDN controller 1 itself (see fig. 4), may be provided in an external chaining module 11 (see fig. 5), or can be distributed over one or more SDN applications 4 (see fig. 6). Details of these various use cases of the flow table 13 are described below. The SDN applications 4 may use the flow table 13 when a flow comprising at least one packet is routed according to the at least one service chain 3. The SDN applications 4 are each aware of their locations in the service chain 3, but are not necessarily aware of the actual routing order of the at least one data packet according to the service chain 3 order, or of the actual locations of the other SDN applications 4 in the service chain 3. By using the flow table 13, a predefined routing of a flow 9 through the SDN applications 4 according to the order of a service chain 3 can nevertheless be efficiently maintained, without routing the flow through the SDN controller 1.

In the flow table 13, flow information, for example, a flow ID, the type of the flow, or the so called 5 tuple (comprising source IP address, destination IP address, source port number, destination port number and the protocol in use) can be stored, as shown in Fig. 1. Furthermore, metadata information can be stored in the flow table 13, for instance, a type length value (TLV). The metadata may also comprise an application type (e.g. Video, P2P, etc.), a specific application ID (e.g. WeBex Video, Bittorrent), a user ID and/or a flow content ID (e.g. file types, encrypted/non-encrypted content, etc). The metadata may also comprise frame information about each frame of the flow 9, for instance information concerning a frame marked for dropping, a changed header (optionally with previous header information) and/or previous header information.

The flow table 13 enables sharing of the information between different applications 4, which can individually access the flow table 13 via their respective API 6. For example, each application 4 can access and query the flow table 13, in order to obtain the information stored therein, or it can store information extracted from a flow 9 into the flow table 13.

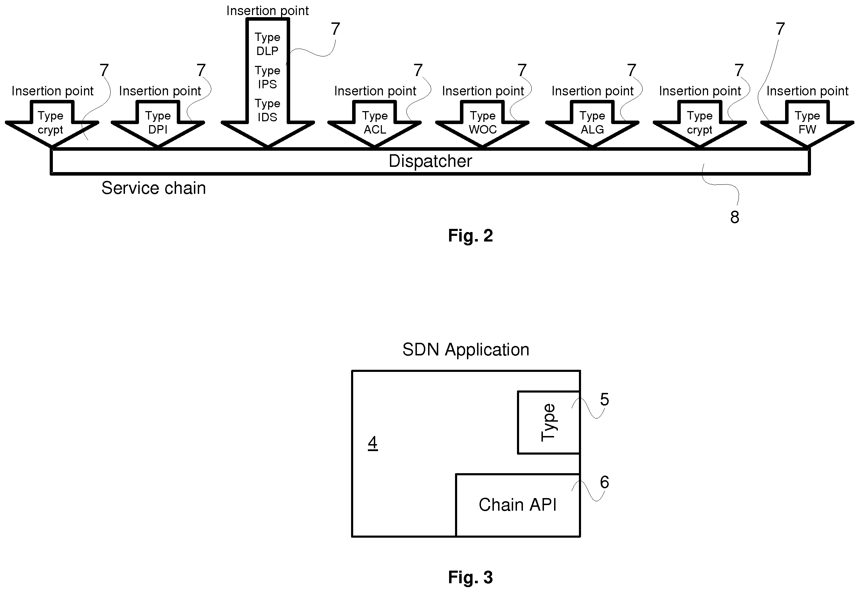

Fig. 2 shows in more detail an example of a service chain 3 created in the SDN controller 1. The service chain 3 has a plurality of service insertion points 7, which are locations in the service chain 3, at which specific application types 5 may be registered. The service insertion points 7 are exposed to the applications 4 through at least one API 6. Each service insertion point 7 is preferably configured to accept only a specific application type 5. However, it may also be of advantage that one or more service insertion points 7 accept more than one but not all application types 5. For example, in Fig. 2 the third service insertion point 7 (from left to right) accepts three different application types (namely applications 4 of the data loss prevention (DLP) type, the intrusion prevention system (IPS) type, and the intrusion detection system (IDS) type. Prior to this third service insertion point 7, a first service insertion point 7 accepts only applications of the crypto type, and a second service insertion point 7 accepts only applications of the DPI type. The service insertion points 7 following the third service insertion point 7 accept applications 4 of, for example, the access control list (ACL) type, the WAN optimization controller (WOC) type, the application layer gateway (ALG) type, or of the firewall (FW) type, respectively. However, more than one application 4 of the same application type 5 can be registered per insertion point 7, but typically per each flow only one application of a specific application type 5 may be used. Furthermore, not all applications 4 (and insertion points 7) need to be used per flow, so the chain is flexible and adaptable per flow.

The service chain 3 provides an order to the different application types 5. Data traffic from the applications 4 to the service chain 3 is carried out via the application type dependent service insertion points 7. Traffic between the individual service insertion points 7 is carried out via a dispatcher 8, which can be a data bus or the like.

Since the SDN controller 1 is aware of the different application types 5 it chains, and since it has all information available in the service data table 2, particularly information on which applications 4 is associated with which application type 5, the SDN controller can order the applications 4 in the service chain 3 depending on their application types 5. By ordering the applications 4 in this way, the SDN controller 1 can ensure that the individual applications in the service chain 3 do not interfere with each other. Moreover, the SDN controller 1 can order the applications 4 in a way that the different application types 5 interact synergistically with each other.

For example, the SDN controller 1 may provide an application of the DPI type at the beginning of the service chain 3. The DPI application can populate the service data table 2 accordingly, after it has operated on a flow, and the information can be used by all other applications 4 succeeding the DPI application in the service chain 3. The service chain 3 in the SDN controller 1 can be configured such that it allows sequential operations of applications 4 in the service chain 4, i.e. it can route a flow of data packets through one application 4 after the other, or can carry out concurrent operations of applications in the service chain 3. For example, in Fig. 2 applications of the IPS, IDS and DLP type are run in parallel at the third service insertion point 7. It is also noted that per flow of data traffic not all applications 4, which are registered to a service chain 3, have to be used. In particular, several applications 4 of a service chain 3 may be omitted. For instance, applications 4 can selectively be made unavailable or available, or may be bypassed. Thereby, the service chain 3 is flexibly adaptable by the SDN controller 1, for instance, for different network users.

Fig. 3 shows an SDN application 4, which is provided with an indication of its application type 5 and at least one (chain) API 6. In order for the SDN application 4 to leverage the service chain 3, the SDN controller 1 exposes the service chain 3 using chain API 6 as shown in Fig. 1, which couple to the chain API 6 in the SDN application 4. The chain API 6 enables the SDN application 4 registering to a specific service insertion point 7 according to its application type 5. The chain API 6 also enables the applications 4 to access the service data table 2. Via the chain API 6, the SDN controller 1 is furthermore capable of coordinating the application type 5 with applications types 5 of other applications 4, and particularly to assign the application type 5 to the correct service insertion point 7 in the service chain 3.

Fig. 4 shows a first use case of the service chain 3 and the flow table 13, respectively. In the first use case, the flow table 13 is created in the SDN controller 1. In the first use case, at first, applications 4 use their chain API 6 to register to the SDN controller 1 (solid lines). The SDN controller 1 then determines the type of the applications 4 that register, and associates the application types 5 with service insertion points 7 in the service chain 3. For each new service chain instance, i.e. each new application 4 that registers to the SDN controller 1, the SDN controller 1 creates an entry in its internal flow table 13. Data traffic 9, e.g. a flow 9 comprising different frames or packets arriving, for example, from a south bound interface (SBI) is then routed through the applications 4 and through the SDN controller 1 by using the service chain 3 and the dispatcher 8 (dotted line). In the first use case a service chain instance may, for example, be realized by configuring the IPC with a predefined order for delivering data packets or frames between the chained applications 4. Applications 4, for example, a DPI type application, may populate the flow and accordingly the flow table 13 with information about the flow 9. For example, the DPI type application can extract information about micro-flows within a main flow, and can populate the flow table 13 accordingly. Also, changes and modifications to the flow or to micro-flows within the flow can be stored in the flow table 13 (dashed arrow).

Fig. 5 shows a second use case of the service chain 3 and the flow table 13, respectively. In the second use case, the flow table 13 is created in a chaining module 11, i.e. it is external to the SDN controller 1. As for the first use case, also in the second use case, at first, applications 4 use their chain API 6 to register to the SDN controller 1. The SDN controller 1 again determines the type of the applications 4 that register, and associates the application types 5 with service insertion points 7 in the service chain 3. In the second use case, for each new service chain instance, i.e. each new application 4 that registers to the SDN controller 1, the SDN controller 1 creates an entry in the flow table 13 by accessing the chaining module 11. The chaining module 11 is therefore provided with at least one API 6. The SDN controller 1 and the applications 4, respectively, may use their (chain) APIs 6, in order to access the flow table 13 in the chaining module 11.

The SDN controller 1 also creates network paths between the applications 4 and the chaining module 11. The network paths are particularly created according to the order of application types 5 defined by the service chain 3, which is installed in the SDN controller 1. Data traffic 9, e.g. a flow 9 comprising different frames or packets arriving, for example, from a south bound interface (SBI) is then routed through the applications 4 and through the chaining module 11, respectively, using the network paths created by the SDN controller 1 (dotted line). Applications 4, for example, a DPI type application, may populate the flow and accordingly the flow table 13 in the chaining module 11 with information about the flow, particularly with metadata extracted from the flow 9. For example, the DPI type application can extract information about micro-flows within a main flow, and can populate the flow table 13 in the chaining module 11 accordingly. Also, changes and modifications to the flow or to micro-flows within the flow can be stored in the flow table 13 installed in the chaining module 11. The extracted metadata may particularly comprise an application type, a specific application ID, a user ID and/or a flow content ID. The extracted metadata may also comprise frame information about each frame of the flow 9, for instance information concerning a frame marked for dropping, a changed header and/or previous header information.

Fig. 6 shows a third use case of the service chain 3 and the flow table 13, respectively. In the third use case, the flow table 13 is distributed between the applications 4, i.e. it is external to the SDN controller 1. As in the first and second use case, in the third use case, at first, applications 4 use their chain API 6 to register to the SDN controller 1. The SDN controller 1 again determines the type of the applications 4 that register, and associates the application types 5 with service insertion points 7 in the service chain 3. In the third use case, for each new service chain instance, i.e. each new application 4 that registers to the SDN controller 1, the SDN controller 1 creates an entry in the flow table 13 distributed between the applications 4. Therefore, the SDN controller 1 uses its API to access the various applications 4 via their respective APIs 6.

Data traffic 9, e.g. a flow 9 comprising different frames or packets arriving, for example, from a south bound interface (SBI) is then routed directly through the applications 4 and according to the at least one service chain 3 of applications 4 maintained in context in the SDN controller 1 (dotted line). To this end, the applications 4 preferably use a message passing mechanism 12. The message passing mechanism 12 may also be used to exchange per flow information between the applications 4. The message passing mechanism 12 may be implemented in the SDN controller 1 or in an external module. In the second use case a service chain instance may, for example, be realized by configuring forwarding entries of (virtual) switches, of the hosts on which the applications 4 are installed, for delivering data packets or frames in a predefined order between the chained applications 4. Applications 4, for example, a DPI type application, may populate the flow and accordingly the distributed flow table 13 with information about the flow, particularly with metadata extracted from the flow 9. For example, the DPI type application can extract information about micro-flows within a main flow, and can populate the distributed flow table 13 accordingly. Also, changes and modifications to the flow or to micro-flows within the flow can be stored in the service data table 2 distributed between the applications 4. The extracted metadata may particularly comprise an application type, a specific application ID, a user ID and/or a flow content ID. The extracted metadata may also comprise frame information about each frame of the flow 9, for instance information concerning a frame marked for dropping, a changed header and/or previous header information.

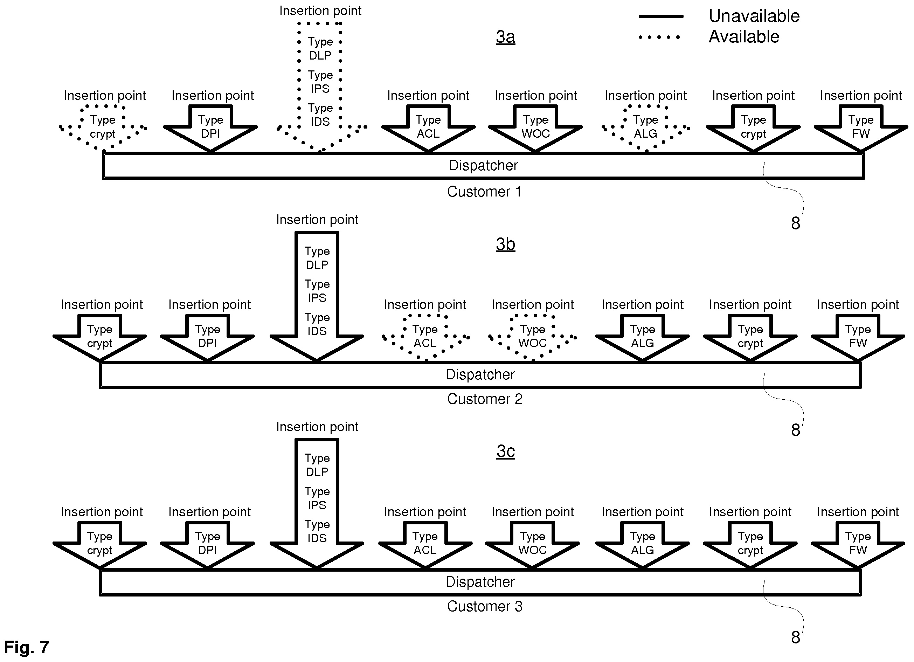

Fig. 7 shows differently customized service chains 3a, 3b, 3c, i.e. different service chain instances, which can be created in the SDN controller 1. The SDN controller 1 may create more than one service chain 3 instance, for example, service chains 3a, 3b, 3c customized for different customers 1, 2, 3. In Fig. 7 the service chain customization is provided for customer 1, customer 2 and customer 3, respectively. In particular, not each customer may need all applications of a service chain 3. Therefore, depending on the customer, a different application order may be established in a service chain 3a, 3b, 3c.

Preferably, the at least one service chain 3 in the SDN controller 1 is flexible, and can be customized preferably dynamically to the preferences of the customers. To this end, the SDN controller 1 is preferably configured to selectively make specific applications 4 in the service chain 3 available or unavailable depending on the customer. For example, the SDN controller 1 may apply a user (customer) defined filter to the applications 4 in the service chain 3. In Fig. 5, it can be seen that the service chain 3a for customer 1 has unavailable Crypto, DLP, IPS, IDS and ALG. The service chain 3b for customer 2 has unavailable ACL and WOC. The service chain 3c for customer 3 has all applications 4 (from all application types 5) in the service chain 3 available.

The SDN controller 1 can either create a plurality of service chains 3a, 3b, and 3c for different customers, or can use a single service chain 3, which can be flexibly adapted by selectively filtering out applications 4 depending on the customer.

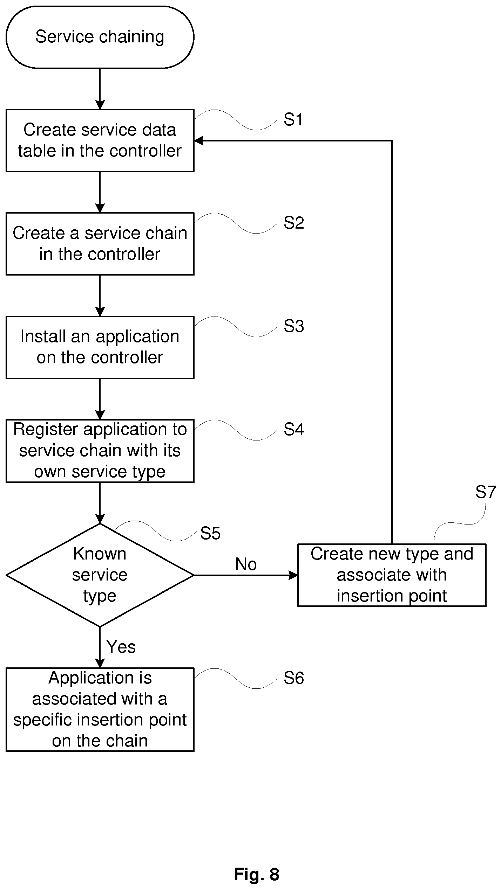

Fig. 8 shows a general flow chart illustrating service chaining according to a method for chaining applications 4 in SDN according to an embodiment of the present invention. In a first step S1 a service data table 2, is created in the SDN controller 1. Furthermore, a flow table 13 may be created in step S1. As described above the flow table 13 may be created in step S1 in the SDN controller 1, in an external chaining module 11, or may be distributed among a plurality of applications 4. This flow table 13 enables sharing of information between different applications 4 with regards to the flows. In an embodiment, a DPI function would extract information about "micro-flows" within a main flow, and would populate the flow table 13 accordingly. Furthermore, this flow table 13 also enables storing of information about flow changes by the application for further use. For example a NAT function may change the source IP of the flow and this would register at the MetaData/TLV fields of the flow table 13 for the succeeding Firewall to use. In a second step S2 a service chain 3 is created in the SDN controller 1. Also more than one service chain 3 may be created in this step S2. In a step S3 at least one application 4 is installed on the SDN controller 1, and in a further step S4 at least one application 4 is registered to the service chain 3 based on its application type 5. The application type 5 is associated with the application 4 in the service data table 2.

For the step S4 of registering the application 4 to the service chain 3, the SDN controller 1 determines in step S5, whether the service type, i.e. the application type 5 of the application 4 to be registered, is known, i.e. whether an application type 5 is associated with the application 4 in the service data table 2. In case the application type 5 is known, the application 4 is associated in step S6 with a specific service insertion point 7 in the service chain 3. In particular, the SDN controller 1 chooses the service insertion points 7 for the application 4 based on its application type 5. If the application type 5 is not known in step S5, the SDN controller 1 creates in step S7 a new application type, and associates the application 4 with this new application type 5 in the service data table 2. Furthermore, the SDN controller 1 associates the application type 5 with a service insertion point 7 in the service chain 3. Then the SDN controller 1 returns to step S 1.

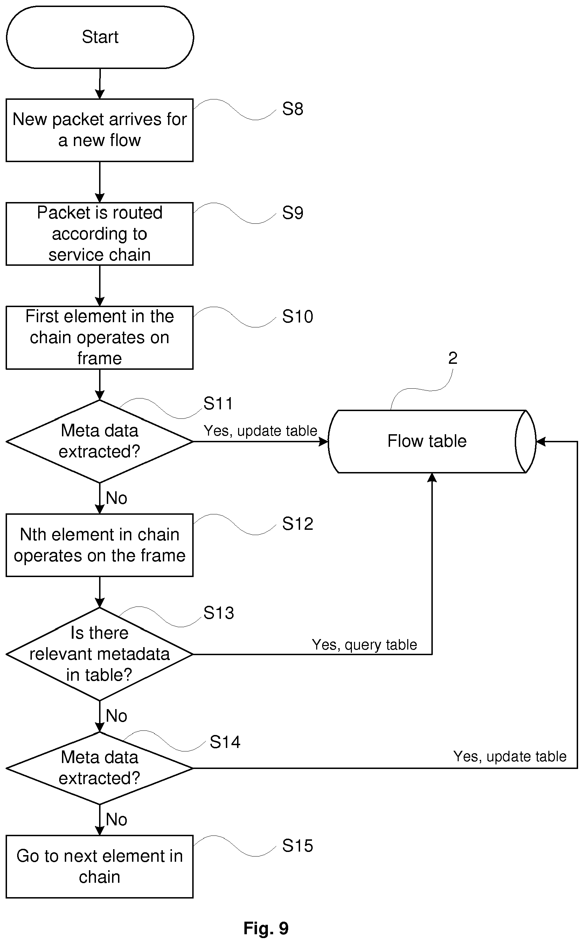

Fig. 9 shows in general the routing of data traffic, i.e. of at least a flow comprising one or a plurality of data packets, through the service chain 3. In step S8 a new packet arrives for a new flow 9. In step S9 the packet is sent to the first element of the service chain 3 (e.g. by the SDN controller 1). In step S10 the first element, i.e. the first application 4, in the service chain 3 operates on the packet, i.e. on the frame. Some applications 4 are able to extract metadata from the flow, while operating on the flow. Hence, in step S11, metadata can be extracted from the packet of the flow 9 by the first application 4, and the flow table 13 is accordingly updated with the extracted metadata. As described above, the flow table 13 may be located in the SDN controller 1, the external chaining module 11, or in a distributed manner in the applications 4. After the first application 4 finishes the processing of the packet (and independently if metadata was extracted or not in step S11) another application 4 (e.g. succeeding the first application 4) in the service chain 3 may operate on the packet (step S12). Some applications 4 may also query the flow table 13 for relevant metadata. If, for example, an application 4 determines that it requires relevant metadata it can query in step S13 the flow table 13. The application 4 can also store extracted metadata from the flow in step S14, and can accordingly update the flow table 13. Finally, in step S15 a further application 4 in the service chain operates on the packet, until all applications 4 in the service chain 3 have completed their operation on the flow.

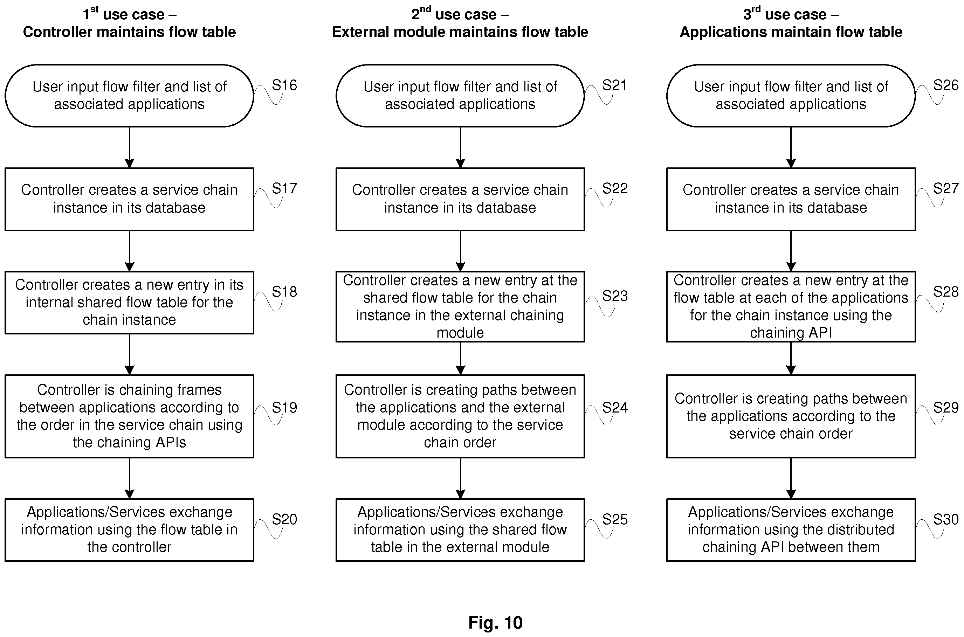

Fig. 10 shows specifically how the service chain 3 created in the SDN controller 3 may be maintained by using the flow table 2, which may be created in the SDN controller 1, in the chaining module 11, or may be distributed over the applications 4, respectively.

In the first use case (left flow diagram of fig. 10), at first, in step S16, a user may input a flow filter and a list of associated applications 4. Based on the applications 4 the SDN controller 1 can create, in step S17, a service chain 3, e.g. stored as routing scheme in its database. The SDN controller 1 may also apply the user (customer) defined filter to applications 4 of an existing service chain 3. In step S18 the SDN controller 1 then creates an entry in the flow table 13 for each application 4 (e.g. for storing information extracted by the application 4 from the flow) associated with the user. In the first use case the service data table 2 is installed in the SDN controller 1. Data traffic, e.g. a flow 9 comprising different frames or packets are then chained in step S19 between the applications 4 according to the order of the applications 4 in the service chain 3. The SDN controller 1 therefore uses the (chain) APIs 6 for connecting between applications 4 and service insertion points 7 of the service chain 3, and uses the dispatcher 8 for connections between service insertion points 7. In step S20 the applications or services may exchange information, e.g. about the flow 9, about micro-flows within the flow 9, or about changes and modifications to the flow 9 or the micro-flows, by using the flow table 13 installed in the SDN controller 1.

In the second use case (middle flow diagram of fig. 10), at first, in step S21, a user may input a flow filter and a list of associated applications 4. Based on the applications 4 the SDN controller 1 can create, in step S22, a service chain 3, e.g. in its database.

The SDN controller 1 may also apply the user (customer) defined filter to applications 4 of an existing service chain 3. In step S23 the SDN controller 1 then creates an entry in the flow table 13 for each service chain instance, i.e. for each application 4 associated with the user. In the second use case the flow table 13 is installed in the external chaining module 11. In step S24 the SDN controller 1 creates network paths between the applications 4 and the chaining module 11 according to the order of the service chain 3. Data traffic, e.g. a flow 9 comprising different frames or packets are then routed through the network paths. In step S25 the applications 4 may exchange information, e.g. about the flow 9, about micro-flows within the flow 9, or about changes and modifications to the flow 9 or the micro-flows, by using the flow table 13 installed in the chaining module 11.

In the third use case (right diagram of fig. 10), at first, in step S26, a user may input a flow filter and a list of associated applications 4. Based on the applications 4 the SDN controller 1 can create, in step S27, a service chain 3, e.g. in its database. The SDN controller 1 may also apply the user (customer) defined filter to applications 4 of an existing service chain 3. In step S28 the SDN controller 1, by using at least one (chain) API 6, then creates an entry in the flow table 13 for each service chain instance, i.e. for each application 4 associated with the user. In the third use case the flow table 13 is distributed between the applications 4. In step S29 the SDN controller 1 may create paths for use as a message passing mechanism 12 between the applications 4 according to the order of the service chain 3. The message passing mechanism 12 may, for example, be implemented in the SDN controller 1 or in an external module, e.g. a chaining module 11 or another module. Data traffic, e.g. a flow 9 comprising different frames or packets are then routed through the applications 4 and the message passing mechanism 12. In step S30 the applications 4 use their (chain) APIs to exchange information, e.g. about the flow 9, about micro-flows within the flow 9, or about changes and modifications to the flow 9 or the micro-flows, by using the flow table 13 distributed between the applications 4.

In summary, the present invention provides a method and a controller for a SDN environment, wherein an awareness of the SDN controller 1 to the SDN applications 4 that are provided in the SDN is added, and a service chaining infrastructure is enabled by the SDN controller 1. Thereby, a more efficient and optimized chaining of different SDN applications 4 can be utilized, so that the applications 4 which run as network services over the SDN controller 1 can be ordered in a way that they do not interfere with each other and even use synergies. Thereby, the efficiency of the service chaining is improved, and the requirement for computation resources is reduced.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Method for chaining applications (4) in a software defined network, SDN, the method comprising
creating (S1) a service data table (2) in an SDN controller (1), wherein in the service data table (2) a plurality of applications (4) is associated with a plurality of application types (5);
creating (S2) at least one service chain (3) defining an order of application types (5) in an SDN controller (1), and
registering (S4) at least one application (4) to the at least one service chain (3) based on the application type (5) associated with the at least one application (4) in the service data table (2).

2. Method according to claim 1 further comprising
exposing the at least one service chain (3) and the service data table (2) to applications (4) through at least one application programming interface, API (6).

3. Method according to claim 1 or 2, comprising
creating in the at least one service chain (3) a plurality of service insertion points (7) for applications (4), wherein each service insertion point (7) accepts only applications (4) of one or several application types (5) associated to the service insertion point.

4. Method according to claim 3, wherein each
service insertion point (7) is exposed to applications (4) through at least one API (6).

5. Method according to one of the claims 1 to 4, wherein the registering step (S4) comprises
determining (S5), by the SDN controller (1), the application type (5) of the at least one application (4) according to the service data table (2),
associating (S6), by the SDN controller (1), the at least one application (4) with at least one service insertion point (7) according to the determined application type (5).

6. Method according to claim 5, wherein the registering step (S4) comprises
creating (S7), by the SDN controller (1), a new application type (5) in the service data table (2), if the at least one application (4) is determined (S5) not to be associated with an application type (5) in the service data table (2), and
associating (S7), by the SDN controller (1), the at least one application (4) with at least one service insertion point (7) according to the created application type (5).

7. Method according to one of the claims 1 to 6, further comprising
routing (S8-S15), by the SDN controller (1), at least one flow (9) comprising at least one data packet according to the at least one service chain (3) of applications (4).

8. Method according to claim 7, further comprising
extracting, by the at least one application (4), metadata from the flow (9), and storing (S11) the extracted metadata as information about the flow (9) in a flow table (13).

9. Method according to claim 8, wherein
the metadata extracted from the flow (9) comprises an application type, a specific application ID, a user ID and/or a flow content ID.

10. Method according to claim 8 or 9, wherein
the metadata extracted from the flow (9) comprises frame information about each frame of the flow (9).

11. Method according to claim 10, wherein
the frame information comprises a frame marked for dropping, a changed header and/or previous header information.

12. Method according to one of the claims 8 to 11, wherein
a plurality of applications (4) share the metadata stored in the flow table (13).

13. Method according to one of the claims 8 to 12 wherein
the flow table (13) is created in the SDN controller (1).

14. Method according to claim 13, wherein
the at least one flow (9) is routed (S8-S15) through the SDN controller (1) according to the at least one service chain (3) of applications (4).

15. Method according to one of the claims 8 to 12, wherein
the flow table (13) is created in a chaining module (11) connected to the SDN controller (1).

16. Method according to claim 15, further comprising
creating, by the SDN controller (1), network paths between the at least one application (4) and the chaining module (11) according to the order of application types (5) defined by the service chain (3).

17. Method according to claim 16, wherein
the at least one flow (9) is routed (S8-S15) through the chaining module (11) and the network paths created by the SDN controller (1) according to the at least one service chain (3) of applications (4).

18. Method according to one of the claims 8 to 12, wherein
the flow table (13) is distributed over the at least one application (4) and a further application (4) registered to the service chain (3).

19. Method according to claim 18, wherein
the at least one flow (9) is routed (S8-S15) through the at least one application (4) and the further application (4) according to the at least one service chain (3) of applications (4) by using a message passing mechanism (12).

20. Method according to one of the claims 8 to 19, further comprising
querying (S13), by the at least one application (4), the flow table (13), in order to obtain the stored information about the flow (9).

21. Method according to one of the claims 1 to 20, wherein the service chain creating step (S2) comprises,
creating, by the SDN controller (1), a plurality of service chains (3a, 3b, 3c), and
customizing, by the SDN controller (1), each service chain (3a, 3b, 3c) for a different customer.

22. Method according to one of the claims 8 to 21, further comprising,
associating, by the SDN controller (1), a plurality of flows (9) to the at least one service chain (3) using user defined filtering.

23. Software defined network, SDN, controller (1), for chaining applications in a SDN, wherein
a service data table (2) is installed in the SDN controller (1), wherein in the service data table (2) a plurality of applications (4) are associated with a plurality of application types (5);
at least one service chain (3) defining an order of application types (5) is implemented on the SDN controller (1), and
the SDN controller (1) is configured to register at least one application (4) to the service chain (3) based on the application type (5) associated with the application (4) in the service data table (2).

24. SDN controller (1) according to claim 23, wherein
the SDN controller (1) is configured to create in the at least one service chain (3) a plurality of service insertion points (7) for applications (4), wherein each service insertion point (7) accepts only applications (4) of one or several application types (5) associated to the service insertion point (7).

25. SDN controller (1) according to one of claims 23 or 24, wherein
the SDN controller (1) is configured to determine the application type (5) of the at least one application (4) according to the service data table (2); and
the SDN controller (1) is configured to associate the at least one application (4) with at least one service insertion point (7) according to the determined application type (5).

26. SDN controller (1) according to claim 25, wherein
the SDN controller (1) is configured to create a new application type (5) in the service data table (2), if the at least one application (4) is determined not to be associated with an application type (5) in the service data table (2); and
the SDN controller (1) is configured to associated the at least one application (4) with at least one service insertion point (7) according to the created application type (5).

27. SDN controller (1) according to one of the claims 23 to 26, wherein
the SDN controller (1) is configured to route (S8-S15) at least one flow (9) comprising at least one data packet according to the at least one service chain (3) of applications (4), and
a flow table (13) is installed in the SDN controller (1), wherein in the flow table (13) metadata extracted by the applications (4) from the flow (9) is stored as information about the flow (9).

28. System comprising an SDN controller (1) according to one of the claims 23 to 26 and at least one application (4), wherein
the SDN controller (1) is configured to route (S8-S15) at least one flow (9) comprising at least one data packet according the at least one service chain (3) of applications (4), and
the at least one application (4) is configured to extract metadata from the flow (9), and to store the extracted metadata in a flow table (13) as information about the flow (9).

29. System according to claim 28, wherein
the flow table (13) is created in the SDN controller (1), or
the flow table (13) is distributed over the at least one application (4) and a further application (4) registered to the service chain (3), or
the system further comprises a chaining module (11) connected to the SDN controller (1) and the flow table is created in the chaining module (11).

30. Computer program having a program code for performing the method according to one of claim 1 to 22, when the computer program runs on a computer.

## Patentansprüche

1. Verfahren zum Verketten von Anwendungen (4) in einem softwaredefinierten Netzwerk bzw. SDN, wobei das Verfahren Folgendes umfasst:
Erzeugen (S1) einer Dienstdatentabelle (2) in einer SDN-Steuerung (1), wobei in der Dienstdatentabelle (2) mehrere Anwendungen (4) mit mehreren Anwendungsarten (5) assoziiert sind;
Erzeugen (S2) von mindestens einer Dienstkette (3), die eine Reihenfolge von Anwendungsarten (5) in einer SDN-Steuerung (1) definiert, und
Registrieren (S4) von mindestens einer Anwendung (4) in die mindestens eine Dienstkette (3) basierend auf der Anwendungsart (5), die mit der mindestens einen Anwendung (4) in der Dienstdatentabelle (2) assoziiert ist.

2. Verfahren nach Anspruch 1, ferner umfassend:
Exponieren der mindestens einen Dienstkette (3) und der Dienstdatentabelle (2) über mindestens eine Anwendungsprogrammierungsschnittstelle bzw. API (6) zu Anwendungen (4).

3. Verfahren nach Anspruch 1 oder 2, umfassend:
Erzeugen von mehreren Diensteinfügepunkten (7) für Anwendungen (4) in der mindestens einen Dienstkette (3), wobei jeder Diensteinfügepunkt (7) nur Anwendungen (4) einer oder mehrerer Anwendungsarten (5), die mit dem Diensteinfügepunkt assoziiert ist bzw. sind, akzeptiert.

4. Verfahren nach Anspruch 3, wobei
jeder Diensteinfügepunkt (7) über mindestens eine API (6) zu Anwendungen (4) exponiert wird.

5. Verfahren nach einem der Ansprüche 1 bis 4, wobei der Registrierungsschritt (S4) Folgendes umfasst:
Bestimmen (S5), durch die SDN-Steuerung (1), der Anwendungsart (5) der mindestens einen Anwendung (4) gemäß der Dienstdatentabelle (2),
Assoziieren (S6), durch die SDN-Steuerung (1), der mindestens einen Anwendung (4) mit mindestens einem Diensteinfügepunkt (7) gemäß der bestimmten Anwendungsart (5).

6. Verfahren nach Anspruch 5, wobei der Registrierungsschritt (S4) Folgendes umfasst:
Erzeugen (S7), durch die SDN-Steuerung (1), einer neuen Anwendungsart (5) in der Dienstdatentabelle (2), falls bestimmt wird (S5), dass die mindestens eine Anwendung (4) nicht mit einer Anwendungsart (5) in der Dienstdatentabelle (2) assoziiert ist, und
Assoziieren (S7), durch die SDN-Steuerung (1), der mindestens einen Anwendung (4) mit mindestens einem Diensteinfügepunkt (7) gemäß der erzeugten Anwendungsart (5).

7. Verfahren nach einem der Ansprüche 1 bis 6, ferner umfassend:
Routen (S8-S15), durch die SDN-Steuerung (1), von mindestens einem Fluss (9), der mindestens ein Datenpaket umfasst, gemäß der mindestens einen Dienstkette (3) von Anwendungen (4).

8. Verfahren nach Anspruch 7, ferner umfassend:
Extrahieren, durch die mindestens eine Anwendung (4), von Metadaten aus dem Fluss (9) und Speichern (S11) der extrahierten Metadaten als Informationen über den Fluss (9) in einer Flusstabelle (13).

9. Verfahren nach Anspruch 8, wobei
die aus dem Fluss (9) extrahierten Metadaten eine Anwendungsart, eine spezifische Anwendungs-ID, eine Benutzer-ID und/oder eine Flussinhalts-ID umfassen.

10. Verfahren nach Anspruch 8 oder 9, wobei
die aus dem Fluss (9) extrahierten Metadaten Rahmeninformationen über jeden Rahmen des Flusses (9) umfassen.

11. Verfahren nach Anspruch 10, wobei
die Rahmeninformationen einen zum Weglassen markierten Rahmen, einen geänderten Header und/oder vorherige Header-Informationen umfassen.

12. Verfahren nach einem der Ansprüche 8 bis 11, wobei
sich mehrere Anwendungen (4) die in der Flusstabelle (13) gespeicherten Metadaten teilen.

13. Verfahren nach einem der Ansprüche 8 bis 12, wobei
die Flusstabelle (13) in der SDN-Steuerung (1) erzeugt wird.

14. Verfahren nach Anspruch 13, wobei
der mindestens eine Fluss (9) durch die SDN-Steuerung (1) gemäß der mindestens einen Dienstkette (3) von Anwendungen (4) geroutet wird (S8-S15).

15. Verfahren nach einem der Ansprüche 8 bis 12, wobei
die Flusstabelle (13) in einem Verkettungsmodul (11), das mit der SDN-Steuerung (1) verbunden ist, erzeugt wird.

16. Verfahren nach Anspruch 15, ferner umfassend:
Erzeugen, durch die SDN-Steuerung (1), von Netzwerkpfaden zwischen der mindestens einen Anwendung (4) und dem Verkettungsmodul (11) gemäß der Reihenfolge von Anwendungsarten (5), die durch die Dienstkette (3) definiert wird.

17. Verfahren nach Anspruch 16, wobei
der mindestens eine Fluss (9) durch das Verkettungsmodul (11) und die durch die SDN-Steuerung (1) erzeugten Netzwerkpfade gemäß der mindestens einen Dienstkette (3) von Anwendungen (4) geroutet wird (S8-S15).

18. Verfahren nach einem der Ansprüche 8 bis 12, wobei
die Flusstabelle (13) über die mindestens eine Anwendung (4) und eine weitere Anwendung (4), die in die Dienstkette (3) registriert ist, verteilt ist.

19. Verfahren nach Anspruch 18, wobei
der mindestens eine Fluss (9) durch die mindestens eine Anwendung (4) und die weitere Anwendung (4) gemäß der mindestens einen Dienstkette (3) von Anwendungen (4) unter Verwendung eines Nachrichtenvermittlungsmechanismus (12) geroutet wird (S8-S15).

20. Verfahren nach einem der Ansprüche 8 bis 19, ferner umfassend:
Abfragen (S13), durch die mindestens eine Anwendung (4), der Flusstabelle (13), um die gespeicherten Informationen über den Fluss (9) zu erhalten.

21. Verfahren nach einem der Ansprüche 1 bis 20, wobei der Dienstkettenerzeugungsschritt (S2) Folgendes umfasst:
Erzeugen, durch die SDN-Steuerung (1), von mehreren Dienstketten (3a, 3b, 3c) und Anpassen, durch die SDN-Steuerung (1), jeder Dienstkette (3a, 3b, 3c) für einen anderen Kunden.

22. Verfahren nach einem der Ansprüche 8 bis 21, ferner umfassend:
Assoziierten, durch die SDN-Steuerung (1), von mehreren Flüssen (9) mit der mindestens einen Dienstkette (3) unter Verwendung einer benutzerdefinierten Filterung.

23. Softwaredefinierte Netzwerksteuerung bzw. SDN-Steuerung (1) zum Verketten von Anwendungen in einem SDN, wobei
eine Dienstdatentabelle (2) in der SDN-Steuerung (1) installiert ist, wobei in der Dienstdatentabelle (2) mehrere Anwendungen (4) mit mehreren Anwendungsarten (5) assoziiert sind;
mindestens eine Dienstkette (3), die eine Reihenfolge von Anwendungsarten (5) definiert, auf der SDN-Steuerung (1) implementiert ist, und
die SDN-Steuerung (1) zum Registrieren von mindestens einer Anwendung (4) in die Dienstkette (3) basierend auf der Anwendungsart (5), die mit der Anwendung (4) in der Dienstdatentabelle (2) assoziiert ist, konfiguriert ist.

24. SDN-Steuerung (1) nach Anspruch 23, wobei
die SDN-Steuerung (1) zum Erzeugen von mehreren Diensteinfügepunkten (7) für Anwendungen (4) in der mindestens einen Dienstkette (3) konfiguriert ist, wobei jeder Diensteinfügepunkt (7) nur Anwendungen (4) einer oder mehrerer Anwendungsarten (5), die mit dem Diensteinfügepunkt (7) assoziiert ist bzw. sind, akzeptiert.

25. SDN-Steuerung (1) nach einem der Ansprüche 23 oder 24, wobei
die SDN-Steuerung (1) zum Bestimmen der Anwendungsart (5) der mindestens einen Anwendung (4) gemäß der Dienstdatentabelle (2) konfiguriert ist; und
die SDN-Steuerung (1) zum Assoziieren der mindestens einen Anwendung (4) mit mindestens einem Diensteinfügepunkt (7) gemäß der bestimmten Anwendungsart (5) konfiguriert ist.

26. SDN-Steuerung (1) nach Anspruch 25, wobei
die SDN-Steuerung (1) zum Erzeugen einer neuen Anwendungsart (5) in der Dienstdatentabelle (2) konfiguriert ist, falls bestimmt wird, dass die mindestens eine Anwendung (4) nicht mit einer Anwendungsart (5) in der Dienstdatentabelle (2) assoziiert ist; und
die SDN-Steuerung (1) zum Assoziieren der mindestens einen Anwendung (4) mit mindestens einem Diensteinfügepunkt (7) gemäß der erzeugten Anwendungsart (5) konfiguriert ist.

27. SDN-Steuerung (1) nach einem der Ansprüche 23 bis 26, wobei
die SDN-Steuerung (1) zum Routen (S8-S15) von mindestens einem Fluss (9), der mindestens ein Datenpaket umfasst, gemäß der mindestens einen Dienstkette (3) von Anwendungen (4) konfiguriert ist und
eine Flusstabelle (13) in der SDN-Steuerung (1) installiert ist, wobei in der Flusstabelle (13) Metadaten, die durch die Anwendungen (4) aus dem Fluss (9) extrahiert werden, als Informationen über den Fluss (9) gespeichert werden.

28. System, das eine SDN-Steuerung (1) gemäß einem der Ansprüche 23 bis 26 und mindestens eine Anwendung (4) umfasst, wobei
die SDN-Steuerung (1) zum Routen (S8-S15) von mindestens einem Fluss (9), der mindestens ein Datenpaket umfasst, gemäß der mindestens einen Dienstkette (3) von Anwendungen (4) konfiguriert ist und
die mindestens eine Anwendung (4) zum Extrahieren von Metadaten aus dem Fluss (9) und zum Speichern der extrahierten Metadaten in einer Flusstabelle (13) als Informationen über den Fluss (9) konfiguriert ist.

29. System nach Anspruch 28, wobei
die Flusstabelle (13) in der SDN-Steuerung (1) erzeugt wird oder
die Flusstabelle (13) über die mindestens eine Anwendung (4) und eine weitere Anwendung (4), die in die Dienstkette (3) registriert ist, verteilt ist oder
das System ferner ein Verkettungsmodul (11), das mit der SDN-Steuerung (1) verbunden ist, umfasst und die Flusstabelle im Verkettungsmodul (11) erzeugt wird.

30. Computerprogramm mit einem Programmcode zum Durchführen des Verfahrens gemäß einem der Ansprüche 1 bis 22, wenn das Computerprogramm auf einem Computer läuft.

## Revendications

1. Procédé de chaînage d'applications (4) dans un réseau défini par logiciel, SDN, le procédé comprenant de
créer (S1) une table de données de service (2) dans un contrôleur SDN (1), dans lequel, dans la table de données de service (2), une pluralité d'applications (4) sont associées à une pluralité de types d'application (5) ;
créer (S2) au moins une chaîne de service (3) définissant un ordre de types d'application (5) dans un contrôleur SDN (1), et
enregistrer (S4) au moins une application (4) sur ladite au moins une chaîne de service (3) sur la base du type d'application (5) associé à ladite au moins une application (4) dans la table de données de service (2).

2. Procédé selon la revendication 1, comprenant en outre de
exposer ladite au moins une chaîne de service (3) et la table de données de service (2) à des applications (4) par l'intermédiaire d'au moins une interface de programmation d'application, API (6).

3. Procédé selon la revendication 1 ou 2, comprenant de
créer, dans ladite au moins une chaîne de service (3), une pluralité de points d'insertion de service (7) pour des applications (4), dans lequel chaque point d'insertion de service (7) accepte uniquement des applications (4) d'un ou plusieurs types d'application (5) associés au point d'insertion de service.

4. Procédé selon la revendication 3, dans lequel chaque point d'insertion de service (7) est exposé à des applications (4) par l'intermédiaire d'au moins une API (6).

5. Procédé selon l'une des revendications 1 à 4, dans lequel l'étape d'enregistrement (S4) comprend de
déterminer (S5), par le contrôleur SDN (1), le type d'application (5) de ladite au moins une application (4) selon la table de données de service (2), et
associer (S6), par le contrôleur SDN (1), ladite au moins une application (4) avec au moins un point d'insertion de service (7) selon le type d'application déterminé (5).

6. Procédé selon la revendication 5, dans lequel l'étape d'enregistrement (S4) comprend de
créer (S7), par le contrôleur SDN (1), un nouveau type d'application (5) dans la table de données de service (2), si ladite au moins une application (4) est déterminée (S5) comme n'étant pas associée à un type d'application (5) dans la table de données de service (2), et
associer (S7), par le contrôleur SDN (1), ladite au moins une application (4) avec au moins un point d'insertion de service (7) selon le type d'application créé (5).

7. Procédé selon l'une des revendications 1 à 6, comprenant en outre de
acheminer (S8-S15), par le contrôleur SDN (1), au moins un flux (9) comprenant au moins un paquet de données selon ladite au moins une chaîne de service (3) d'applications (4).

8. Procédé selon la revendication 7, comprenant en outre de
extraire, par ladite au moins une application (4), des métadonnées du flux (9), et stocker (S11) les métadonnées extraites en tant qu'informations sur le flux (9) dans une table de flux (13).

9. Procédé selon la revendication 8, dans lequel
les métadonnées extraites du flux (9) comprennent un type d'application, un ID d'application spécifique, un ID d'utilisateur et/ou un ID de contenu de flux.

10. Procédé selon la revendication 8 ou 9, dans lequel
les métadonnées extraites du flux (9) comprennent des informations de trame sur chaque trame du flux (9).

11. Procédé selon la revendication 10, dans lequel
les informations de trame comprennent une trame marquée pour l'extraction, un entête modifié et/ou des informations d'en-tête antérieures.

12. Procédé selon l'une des revendications 8 à 11, dans lequel
une pluralité d'applications (4) partagent les métadonnées stockées dans la table de flux (13).

13. Procédé selon l'une des revendications 8 à 12, dans lequel
la table de flux (13) est créée dans le contrôleur SDN (1).

14. Procédé selon la revendication 13, dans lequel
ledit au moins un flux (9) est acheminé (S8-S15) par l'intermédiaire du contrôleur SDN (1) selon ladite au moins une chaîne de service (3) d'applications (4).

15. Procédé selon l'une des revendications 8 à 12, dans lequel
la table de flux (13) est créée dans un module de chaînage (11) connecté au contrôleur SDN (1).

16. Procédé selon la revendication 15, comprenant en outre de
créer, par le contrôleur SDN (1), des chemins de réseau entre ladite au moins une application (4) et le module de chaînage (11) selon l'ordre des types d'application (5) définis par la chaîne de service (3).

17. Procédé selon la revendication 16, dans lequel
ledit au moins un flux (9) est acheminé (S8-S15) par l'intermédiaire du module de chaînage (11) et des chemins de réseau créés par le contrôleur SDN (1) selon ladite au moins une chaîne de service (3) d'applications (4).

18. Procédé selon l'une des revendications 8 à 12, dans lequel
la table de flux (13) est répartie sur ladite au moins une application (4) et une autre application (4) enregistrée dans la chaîne de service (3).

19. Procédé selon la revendication 18, dans lequel
ledit au moins un flux (9) est acheminé (S8-S15) par l'intermédiaire de ladite au moins une application (4) et de l'autre application (4) selon ladite au moins une chaîne de service (3) d'applications (4) en utilisant un mécanisme de passage de message (12).

20. Procédé selon l'une des revendications 8 à 19, comprenant en outre de
interroger (S13), par ladite au moins une application (4), la table de flux (13), afin d'obtenir les informations stockées sur le flux (9).

21. Procédé selon l'une des revendications 1 à 20, dans lequel l'étape de création de chaîne(s) de service (S2) comprend de
créer, par le contrôleur SDN (1), une pluralité de chaînes de service (3a, 3b, 3c), et personnaliser, par le contrôleur SDN (1), chaque chaîne de service (3a, 3b, 3c) pour un client différent.

22. Procédé selon l'une des revendications 8 à 21, comprenant en outre de
associer, par le contrôleur SDN (1), une pluralité de flux (9) à ladite au moins une chaîne de service (3) en utilisant un filtrage défini par l'utilisateur.

23. Contrôleur de réseau défini par logiciel, SDN, (1), pour chaîner des applications dans un SDN, dans lequel
une table de données de service (2) est installée dans le contrôleur SDN (1), dans lequel, dans la table de données de service (2), une pluralité d'applications (4) sont associées à une pluralité de types d'application (5) ;
au moins une chaîne de service (3) définissant un ordre de types d'application (5) est implémentée sur le contrôleur SDN (1), et
le contrôleur SDN (1) est configuré pour enregistrer au moins une application (4) sur la chaîne de service (3) sur la base du type d'application (5) associé à l'application (4) dans la table de données de service (2).

24. Contrôleur SDN (1) selon la revendication 23, dans lequel
le contrôleur SDN (1) est configuré pour créer dans ladite au moins une chaîne de service (3) une pluralité de points d'insertion de service (7) pour des applications (4), dans lequel chaque point d'insertion de service (7) accepte uniquement des applications (4) d'un ou plusieurs types d'application (5) associés au point d'insertion de service (7).

25. Contrôleur SDN (1) selon l'une des revendications 23 et 24, dans lequel
le contrôleur SDN (1) est configuré pour déterminer le type d'application (5) de ladite au moins une application (4) selon la table de données de service (2) ; et
le contrôleur SDN (1) est configuré pour associer ladite au moins une application (4) à au moins un point d'insertion de service (7) selon le type d'application déterminé (5).

26. Contrôleur SDN (1) selon la revendication 25, dans lequel
le contrôleur SDN (1) est configuré pour créer un nouveau type d'application (5) dans la table de données de service (2), si ladite au moins une application (4) est déterminée comme n'étant pas associée à un type d'application (5) dans la table de données de service (2) ; et
le contrôleur SDN (1) est configuré pour associer ladite au moins une application (4) avec au moins un point d'insertion de service (7) selon le type d'application créé (5).

27. Contrôleur SDN (1) selon l'une des revendications 23 à 26, dans lequel
le contrôleur SDN (1) est configuré pour acheminer (S8-S15) au moins un flux (9) comprenant au moins un paquet de données selon ladite au moins une chaîne de service (3) d'applications (4), et
une table de flux (13) est installée dans le contrôleur SDN (1), dans lequel, dans la table de flux (13), des métadonnées extraites par les applications (4) du flux (9) sont stockées en tant qu'informations sur le flux (9).

28. Système comprenant un contrôleur SDN (1) selon l'une des revendications 23 à 26 et au moins une application (4), dans lequel
le contrôleur SDN (1) est configuré pour acheminer (S8-S15) au moins un flux (9) comprenant au moins un paquet de données selon ladite au moins une chaîne de service (3) d'applications (4), et
ladite au moins une application (4) est configurée pour extraire des métadonnées du flux (9), et pour stocker les métadonnées extraites dans une table de flux (13) en tant qu'informations sur le flux (9).

29. Système selon la revendication 28, dans lequel
la table de flux (13) est créée dans le contrôleur SDN (1), ou
la table de flux (13) est répartie sur ladite au moins une application (4) et une autre application (4) enregistrée dans la chaîne de service (3), ou
le système comprend en outre un module de chaînage (11) connecté au contrôleur SDN (1) et la table de flux est créée dans le module de chaînage (11).

30. Programme informatique ayant un code de programme pour exécuter le procédé selon l'une des revendications 1 à 22, lorsque le programme informatique est exécuté sur un ordinateur.
